# EUROPEAN PATENT APPLICATION

(11) **EP 1 746 528 A1**
(43) Date of publication of application: **24.01.2007**
(21) Application number: 06253725.3
(22) Date of filing: 17.07.2006
(51) Int. Cl.: G06K 9/00, G09B 19/00

(54) **Computer vision system**

(30) Priority: 18.07.2005 GB 0514695
(71) Applicant: OMNIPERCEPTION LIMITED, Shalford, Guildford, Surrey GU4 8UU (GB)
(72) Inventor: Galambos, Charles, Guildford, GU 3EQ (GB)
(74) Representative: Bibby, William Mark

(57) **Abstract**

A method and system for monitoring and prompting a subject to perform a task composed of a sequence of steps using a computer vision system. The method includes the steps of monitoring and obtaining information on the subject's performance of a step in the sequence; checking the obtained information to see if the step has been correctly executed; prompting the subject if the step is incorrectly executed and repeating the above steps until the step is correctly executed, further repeating the above steps for each consecutive step in the sequence until the task is completed successfully.

## Description

This invention relates to a method and system for monitoring and prompting a subject to perform a task comprised of a sequence of steps using a computer vision system.

Computer vision systems have been developed to supervise robots and to help to navigate autonomous vehicles. Somewhat more unusual is to employ computer vision systems to monitor human behaviour. There are examples of this kind of application, but the monitoring is indirect, as in the case of monitoring car driving, which involves the detection of the driver of the car falling asleep. More direct monitoring is carried out in surveillance applications. However, the goal of such surveillance systems is to observe human motion in a closely monitored space and to detect any suspicious behaviour of the subjects by analysing their motion patterns, the interaction of the subjects, and their posture. More complex behaviour recognition is less common, with the exception of systems that interpret, for instance, sign language and gestures for man machine communication. There are currently no computer vision systems that can monitor and understand human behaviour, involving a complex sequences of tasks, each affecting one or more objects.

According to the invention there is provided a method of monitoring and prompting a subject to perform a task composed of a sequence of steps using a computer vision system comprising the steps of: monitoring said subject as they perform a said step and obtaining information on said subjects performance; checking said subject has correctly executed said current step by analysing said obtained information; prompting said subject if said step is incorrectly executed, and instructing subject to correct said incorrect step, repeating said monitoring, checking and prompting steps until said step is correctly executed; repeating said monitoring, checking and prompting steps until said tasks is successfully completed.

According to the invention there is also provided a computer vision system for monitoring and prompting a subject to perform a task composed of sequence of steps comprising: monitoring means for monitoring said subject as they perform a said step and obtaining information on said subjects performance; checking means for checking that said subject has correctly executed said current step by analysing said obtained information and prompting means for prompting said subject if said step is incorrectly executed and instructing subject to correct said incorrect step, control means to cause said monitoring, checking and prompting means to repeat operation until said current step is correctly executed; said control means also causing further repetition of operation of said monitoring, checking and prompting means until said task is completed.

A computer vision-based system that understands complex human action, involving a sequence of manipulation tasks, leading to a goal is described. A goal could be, for example, to lay the table; prepare a meal; get dressed in the morning; get undressed before going to bed, etc. The aim of the invention is to support elderly and/or disabled people in their home environment, or in care, to live an independent or quasi-independent life as long as possible. It is particularly intended for those suffering from apraxia, i.e. people who retain the capability to successfully execute muscle actions, but are unable to drive the appropriate sequence of mental actions required to control the muscle action. There is a significant section of population with limited brain function caused by brain damage due to a vascular incident, dementia, or other organic factors that places them into the above category.

An Embodiment of the Invention will now be described, by way of example only, with reference to the sole accompanying figure, which shows the processes carried out by a computer vision system during the monitoring and prompting of a subject performing a sequence of steps in a specific task.

The computer vision system (1) is comprised of computer (50), camera (3), camera control (4) and speaker (voice prompt) (5). The subject will be in a scene (2) where a task, comprising of a sequence of steps is to be performed.

The computer (50) includes several different processing elements. There is a human action monitoring module (10), an understanding/event recognition module (20) and a behaviour and interpretation module (30).

The human action monitoring module (10) comprises a person detection and identification module (11), an object detection and recognition module (12), a human motion tracking module (13) for tracking all the body parts of the subject and an object and scene tracking module (14) which uses and processes the visual information captured by the camera (3). Recognition of objects which may be necessary for the performing of the task is based on object models (15) previously learnt by the system (1) and stored in an object model database (16).

The understanding/event recognition module (20) comprises a scene understanding/visual event recognition module (21) and an object relations model (23), such a model is typically acquired by machine (spatial context) learning.

Finally, the behaviour and interpretation module (30) comprises an interpretation and monitoring module (31) and an action model (33). Typically, the action models are acquired by machine learning (32).

Initially, the camera (3) will capture an image of the subject's face and verify the identity of the subject using the computer (50). This step is carried out by the person detection and identification module (11).

Once the subject's identity has been verified by computer (50), the speaker (5) will prompt the subject to begin executing the steps of the task. The steps of the task are executed one at a time, and each step is recorded by camera (3). By reviewing the images acquired by the camera (3) the computer (50) will check that each step in the task has been correctly executed. The images recorded by the camera (3) are initially analysed by human action monitoring module (10) and the information obtained by this analysis is fed to the understanding/event recognition module (20). The understanding/event recognition module (20) looks for changes in the state of an object (e.g. a static object becoming dynamic or vice versa, an object being put on/taken off a subject). The understanding/event recognition module (20) also provides a model of the scene, in terms of the objects it contains and the location, dynamics and relationships of all the objects within the scene.

The scene model and visual events resulting from the understanding/event recognition module (20) are output to the behaviour and interpretation module (30). This uses the scene model and visual events to determine whether the current step in the task has been correctly executed.

If the current step has been incorrectly executed, the speaker (5) will inform the subject, and direct the subject to correct the error. Camera (3) will monitor the subject as they try to correct the error and computer (50) will check that the correct step is being performed. Once the correct step has been performed, or if the correct step was performed initially, the computer (50) will instruct the speaker (5) to prompt the subject with the next step in the task. The above described steps will be repeated until all the steps and the tasks have been successfully completed.

For example, consider the problem of instructing the subject to put on a pair of shoes. The speaker (5) will inform the subject of the task to be performed. The first step in the task will be for the camera (3) to recognise and locate the shoes within scene (2). This will be carried out by the object detection and recognition module (12) which will analyse images from camera (3) to locate the shoes in the scene. The information on shoe location from the human action monitoring module (10) will be passed to the understanding/event recognition module (20) and behaviour and interpretation module (30). Computer (50) will then instruct speaker (5) to direct the subject to the shoes. The camera (3) will record the subject as they move within the scene towards the shoes. The human motion tracking module (13) will analyse the acquired camera images to provide instantaneous information on the pose and position of the subject within the scene as they approach the shoes. The object and scene tracking module (14) will also analyse the acquired camera images to maintain location information on the shoes. Once the subject has reached the shoes the computer (50) will recognise this and speaker (5) will instruct the subject to put on the shoes one at a time. Whilst the subject is putting the shoes on, the human motion tracking module (13) will analyse information about the pose and position of the subject within the scene and object and scene tracking module (40) will deliver instantaneous pose and position information about the shoes to understanding/event recognition module and behaviour and interpretation module (30).

The scene model provided by understanding/event recognition module (20) drives the camera control (4) to maintain the subject in the field of view, or to locate an object in the scene (2).

The process of learning object models, object relation models and action models requires training examples of objects, relations and action sequences to be presented to the system. Computer vision techniques are then used to extract suitable representations of these entities and to determine the appropriate parameters of discriminant functions to facilitate their recognition.

The computer vision system is also able to learn human behaviour defined as a sequence of manipulation actions carried out by the subject, affecting a set of objects (items of clothing, shoes, etc). The acquisition of knowledge of human behaviour is accomplished either by automated computer based learning or by domain knowledge injection.

The computer vision system has the facility to acquire contextual information regarding the storage and/or location of objects required to execute certain actions. The computer vision system is also able to recognise objects involved in a particular human behaviour, including non-rigid objects such as items of clothing.

In a preferred embodiment, at any point in an action sequence the computer vision system is able to prompt the subject regarding the next step of the sequence.

The computer vision system has the capability to inspect whether each elementary step (i.e. picking an item of clothing and putting it on) in the sequence has been executed correctly.

The computer vision system also has the capability to monitor human behaviour and detect any anomalies, as even prompted actions may not be executed correctly or could be missed or ignored.

In environments with multiple cameras covering different parts of the living space the computer vision system is able to hand over the prompting and monitoring task to adjacent cells of the system.

The computer vision system has the ability continuously to adapt its performance, and the prompting and monitoring process will only be terminated when the required behaviour has been successfully executed.

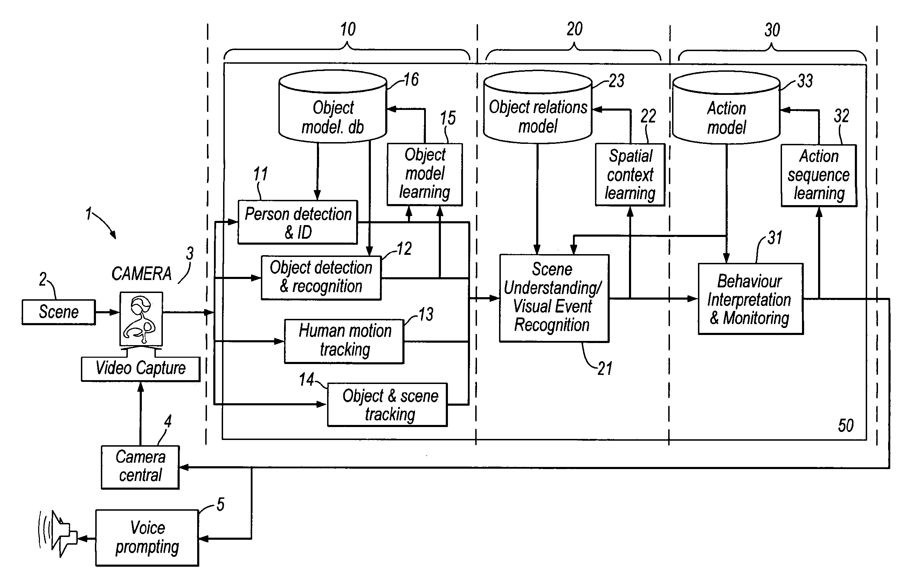

## Claims

1. A method of monitoring and prompting a subject to perform a task composed of a sequence of steps using a computer vision system comprising the steps of:
monitoring said subject as they perform a said step and obtaining information on said subject's performance;
checking said subject has correctly executed said step by analysing said obtained information;
prompting said subject if said step is incorrectly executed, and instructing subject to correct said incorrect step, repeating said monitoring, checking and prompting steps until said step is correctly executed;
repeating said monitoring, checking and prompting steps until said task is successfully completed.

2. A method according to claim 1 including the step of prompting said subject to perform the first step in said sequence of steps, and further prompting said subject to perform a next step in said sequence of steps, provided said immediately preceding step is successfully completed.

3. A method according to claim 1 or claim 2 further including the step of acquiring and storing information on said sequence of steps in said task, in said computer vision system, prior to the performance of said sequence of steps by said subject.

4. A method according to claim 3 wherein said step of acquiring and storing information is accomplished by automated computer based learning.

5. A method according to claim 3 wherein said step of acquiring and storing information is accomplished by domain knowledge injection.

6. A method according to any one of claims 3 to 5 wherein said checking step performs said analysis of said obtained information by comparing it with said previously acquired and stored information.

7. A method according to any one of claims 3 to 6 wherein said step of acquiring and storing information includes acquiring information on one or more objects necessary for said performance of said sequence of steps.

8. A method according to claim 7 wherein said step of acquiring information on one or more objects includes acquiring information on the object in a variety of different states.

9. A method according to claim 7 or 8 wherein said monitoring step includes monitoring said subject's surroundings; detecting and recognising one or more objects necessary for the performance of said current step and prompting said subject towards said one or more objects.

10. A method according to any preceding claim wherein said monitoring step is performed by at least one camera.

11. A method according to claim 10 wherein said subject is maintained within the field of view of said at least one camera, at least until said sequence of steps is complete.

12. A method according to claim 11 wherein said subject passes from the field of view of one camera to the field of view of a second camera as said subject performs said current step.

13. A method according to claim 9 wherein said monitoring step is carried out by at least one camera and said camera is positioned to locate said one or more objects.

14. A method according to any preceding claim including the step of verifying the identity of said subject prior to said initial prompting step.

15. A computer vision system for monitoring and prompting a subject to perform a task composed of sequence of steps comprising:
monitoring means for monitoring said subject as they perform a said step and obtaining information on said subjects performance;
checking means for checking that said subject has currently executed said current step by analysing said obtained information;
and prompting means for prompting said subject if said step is incorrectly executed and instructing subject to correct said incorrect step,
control means to cause said monitoring, checking and prompting means to repeat operation until said step is correctly executed;
said control means also causing further repetition of operation of said monitoring, checking and prompting means until said task is completed.

16. A computer vision system according to claim 15 further including memory means for acquiring and storing information on said sequence of steps in said task prior to said performance of said sequence of steps by said subject.

17. A computer vision system according to claim 15 or claim 16 wherein said monitoring means is at least one camera.
